# EUROPEAN PATENT APPLICATION

(11) **EP 4 312 197 A1**
(43) Date of publication of application: **31.01.2024**
(21) Application number: 22187247.6
(22) Date of filing: 27.07.2022
(51) Int. Cl.: G06V 20/10, G06V 20/52, G06V 20/58

(54) **VEHICLE, APPARATUS, COMPUTER PROGRAM, AND METHOD FOR MONITORING AN ENVIRONMENT OF A VEHICLE**

(71) Applicant: Bayerische Motoren Werke Aktiengesellschaft, 80809 München (DE)
(72) Inventor: Minnerup, Pascal, 85716 Unterschleißheim (DE); Terhar, Fynn, 80638 München (DE); Valverde, Diego, 80805 München (DE)

(57) **Abstract**

Embodiments of the present disclosure relate to a vehicle (210), an apparatus (400), a computer program, and a method (100) for monitoring an environment of a vehicle (210). The method (100) comprises obtaining (110), using at least one sensor of the vehicle (210) and a monitoring criterion, object-specific information on an object (220) related to a third party (230). Further, the method (100) comprises providing (120) the object-specific information to the third party (230).

## Description

Embodiments of the present disclosure relate to a vehicle, an apparatus, a computer program, and a method for monitoring an environment of a vehicle. In particular but not exclusively, embodiments relate to a concept for privacy protection in monitoring the environment using a vehicle.

Monitoring the environment of vehicles plays an increasingly important role in automotive applications. Autonomously or semi-autonomously driving vehicles, in practice, may monitor their environment for the purpose of autonomous driving. However, monitoring the environment and/or sharing sensor data of the monitored environment (e.g., with a third party) may be problematic because of privacy concerns.

Hence, there may be a demand for an improved concept for monitoring the environment of a vehicle.

This demand may be satisfied by the subject-matter of the appended independent and dependent claims.

Embodiments are based on the finding that information on the environment which is collected by vehicles can be also used for non-vehicle-related purposes, e.g., for monitoring infrastructure objects in the environment for maintenance and/or surveillance purposes, and may be shared with third parties responsible for maintenance of the infrastructure objects. In this way, monitoring infrastructure objects may be less time-consuming and costly. Another finding is that the such information can be reduced or limited to object-specific information on one or more objects related to a third party related to those objects, e.g., property of the third party, to provide privacy protection, using an appropriate monitoring criterion. The monitoring criterion, e.g., may ensure that the object-specific information provided to the third party is representative of a predefined location, object, and/or scenario for privacy protection. In this way, the third party may only receive object-specific information on its object/s such that the privacy of others is respected. In practice, the object-specific information may be obtained from sensor data of the vehicle (for autonomously or semi-autonomously driving) and may include only a portion thereof related to the object of the third party and/or meta information from the sensor data, as laid out in more detail later.

Embodiments of the present disclosure provide a method for monitoring the environment of a vehicle. The method comprises obtaining, using at least one sensor of the vehicle and a monitoring criterion, object-specific information on an object related to a third party. Further, the method comprises providing the object-specific information to the third party. This, e.g., allows the third party to monitor the object based on the object-specific information, e.g., for less time-consuming and costly maintenance of the object. The monitoring criterion may provide privacy protection, e.g., such that the third party only receives object-specific information of the object related to the third party, e.g., an object that the third party is entitled or authorized to monitor. In practice, the object, e.g., is property of the third party or an object which the third party is appointed or authorized to monitor. The third party may be a (natural) person, an authority, a company, or the like. For example, the third party is an owner of the object or a person/company entrusted by the owner to monitor and/or maintain the object.

Optionally, obtaining the object-specific information comprises monitoring the environment of the vehicle for obtaining sensor data of the environment and obtaining, based on the monitoring criterion, the object-specific information from the sensor data of the environment. This allows a sensor-based monitoring of the object. In some embodiments, the sensor data comprises or corresponds to sensor data for (semi-) autonomously driving. In this case, the sensor data serve for a multifunctional use of the sensor data for (semi-) autonomously driving and for other purposes by the third party.

In some embodiments, the obtained object-specific information comprises an object-specific portion of the sensor data of the environment. In this way, the third party may receive sensor data related to the object as they were recorded by the vehicle. The skilled person having benefit from the present disclosure that, in some applications, the (portion of the) sensor data may be preferred over meta information and/or other information for the use by the third party.

Alternatively or additionally, the object-specific information comprises meta information on the object from the sensor data. As the skilled person will understand, the meta information may be less detailed than the sensor data and, thus may provide even better privacy protection.

Accordingly, obtaining the object-specific information may comprise obtaining the meta information from the sensor data using an aggregator and a privacy evaluator program for checking the aggregator by comparing the aggregator to at least one reference software architecture and/or based on training data used for training the aggregator. In this way, the privacy evaluator may ensure that the aggregator works as intended, in particular, that the aggregator complies and/or does not violate with (predefined) privacy protection requirements. In particular, the proposed use of the privacy evaluator allows to use an aggregator provided and/or trained by the third party or any other external party (e.g., other than a manufacturer of the vehicle).

In some embodiments, the monitoring criterion is indicative of a predefined location where the object is located and obtaining the object-specific information comprises determining whether the object-specific information is representative of the predefined location and obtaining the object-specific information if the object-specific information is representative of the predefined location. This, e.g., may ensure that the third party only receives object-specific information of the predefined location in favor of a further improved privacy protection of others.

Optionally, the monitoring criterion is indicative of one or more predefined scenarios for the environment. Accordingly, obtaining the object-specific information may comprise determining whether at least one of the predefined scenarios is present in the environment and obtaining the object-specific information if at least one of the predefined scenarios is present. The scenarios, e.g., define when or in which event, the third party intends to receive the object-specific information. In applications for maintenance of the object, the scenarios, e.g., comprise (only) scenarios where the object needs repair or other maintenance measures. In this way, the privacy of others may be protected even better and unnecessary communication with the third party may be avoided.

In some embodiments, determining whether at least one of the predefined scenarios is present comprises determining whether the object-specific information is indicative of at least one of the predefined scenarios, and wherein obtaining the object-specific information based on the monitoring criterion comprises obtaining the object-specific information if the object-specific information is indicative of at least one of the predefined scenarios. In practice, the object-specific information, e.g., comprises sensor data and it is determined that the sensor indicates that the object needs repair or other maintenance measures. In this way, additional information on the presence/absence of such scenarios can be dispensed with.

Optionally, determining whether the object-specific information is indicative of at least one of the predefined scenarios comprises determining whether the object-specific information is indicative of at least one of the predefined scenarios using a machine-learning-based program trained to detect the one or more predefined scenarios in the object-specific information. In this way, the scenarios may be detected in the object-specific information more reliably.

The method may further comprise determining information on false positive detections and/or a frequency of detections of at least one of the scenarios from the object-specific information and determining a malfunction based on the information on the frequency of detections and/or false positive detections. In this way, e.g., abusive behavior of an application of the proposed concept may be detected. In embodiments, e.g., one or more of the predefined scenarios are detected unexpectedly often, e.g., more often than a predefined maximum frequency of the one or more scenarios, and/or false positive detections (of such scenarios or other false positive detections) occur unexpectedly often, e.g., more often than a predefined maximum frequency of false positive detections, and the malfunction is determined by comparison with the respective maximum frequency.

In practice, the environment (of the vehicle), e.g., comprises at least one infrastructure object and the object-specific information, accordingly, is indicative of the at least one infrastructure object. In this case, the proposed method allows a more efficient monitoring and maintenance of infrastructure objects.

In some embodiments, the monitoring criterion is indicative of at least one predefined infrastructure object. Accordingly, obtaining the object-specific information may comprise determining if the object-specific information is representative of the at least one predefined infrastructure object and obtaining the object-specific information if the object-specific information is representative of the at least one predefined infrastructure object. The monitoring criterion, e.g., specifies a specific infrastructure object, e.g., a specific building and/or streetlight such that the third party only receives object-specific information on the specified building and/or streetlight. So, in this way, specific predefined objects can be monitored.

Optionally, determining if the object-specific information is indicative of the at least one predefined infrastructure object comprises determining if the object-specific information is indicative of the at least one predefined infrastructure object using a machine-learning-based program trained to detect the at least one predefined infrastructure object in the object-specific information. The skilled person having benefit from the present disclosure will appreciate that the machine-learning-based program may determine more reliably whether the object-specific information is indicative the infrastructure object more reliable than other programs (not based on machine-learning) and, thus, may provide more reliable privacy protection as well as a more reliable monitoring of the object.

In some embodiments, obtaining the object-specific information comprises obliterating a portion of the object-specific information based on the at least one monitoring criterion. In doing so, sensitive portions of the object-specific information can be removed or blurred for even better privacy protection.

In practice, the at least one monitoring criterion may specify at least one object type to be obliterated for privacy protection. Accordingly, obliterating the portion of the object-specific information may comprise determining, from the object-specific information, an information part which is indicative of the at least one object type specified by the at least one monitoring criterion and obliterating the determined information part. Examples of such an object type may comprise faces, license plates, and/or other sensitive objects. Obliterating information on such objects provides even greater privacy protection.

As the skilled person having benefit from the present disclosure will appreciate that, in applications, the proposed method may be implemented on the vehicle or outside/separate from the vehicle by a separate entity which is able to retrieve the object-specific information. Accordingly, the method may be executed by the vehicle and/or an external server separate from the vehicle. The skilled person will understand that the execution of the method by the vehicle may avoid that sensitive information is intercepted, e.g., when communicating such information with the separate entity, and, thus, may provide a higher protection of sensitive information. On the other hand, the execution by the external server/separate entity may reduce computing power required at the vehicle and allows a central review of the shared information.

Other embodiments of the present disclosure provide a computer program having a program code for performing at least one of the methods of the preceding claims, when the computer program is executed on a computer, a processor, or a programmable hardware component.

Further embodiments provide an apparatus comprising one or more interfaces for communication and a data processing circuit configured to control the one or more interfaces and execute, using the one or more interfaces, an embodiment of the proposed method.

Other embodiments of the present disclosure provide a vehicle comprising the proposed apparatus.

Some examples of apparatuses, methods and/or computer programs will be described in the following by way of example only, and with reference to the accompanying figures, in which
Fig. 1 shows a flow chart schematically illustrating an embodiment of a method for monitoring the environment of a vehicle;
Fig. 2 schematically illustrates a use case of the proposed concept;
Fig. 3 shows a flow chart schematically illustrating how a machine-learning-based program for the proposed concept is generated and deployed; and
Fig. 4 shows a block diagram schematically illustrating an embodiment of the proposed apparatus.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Currently an infrastructure provider has to regularly inspect the state of his infrastructure in order to identify parts of the infrastructure that requires maintenance, such as broken streetlights, potholes, bicycle parking lots, or the like. Automated vehicles would be able to observe such infrastructure using their on-board sensors. In some automotive applications of highly automated driving systems, vehicles are equipped with a large number of powerful sensors which operate at many locations that may be of interest to infrastructure providers. Hence, sensor data of such sensors could be used by infrastructure providers to monitor their objects in a more practical, less time-consuming, and less costly way. However, infrastructure providers may not have or get access to sensor data of such sensors for monitoring their infrastructure because of privacy protection concerns. For this reason, vehicle OEMs (original equipment manufacturers) having the sensor data may be unable or unauthorized to grant access to the sensor data of the vehicles.

An objective of the present disclosure, hence, may be to tackle the above problems. In particular but not exclusively, embodiments of the present disclosure provide a system that is able to give infrastructure providers access to information from sensor data of vehicles for monitoring purposes.

Aspects and features of the claimed subject-matter are described in more detail below with reference to the attached drawings.

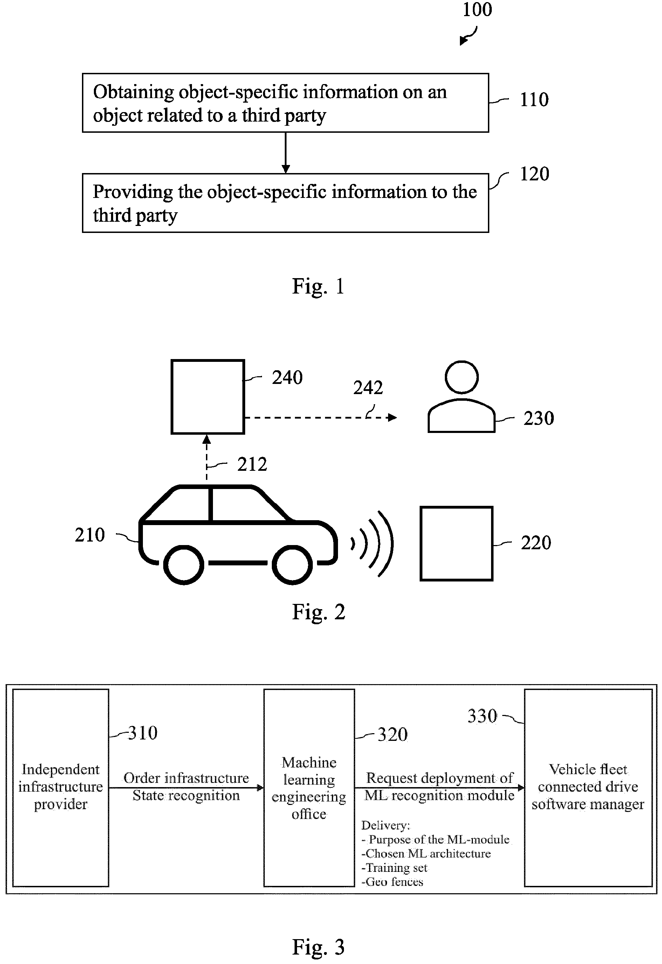

Fig. 1 shows a flow chart schematically illustrating an embodiment of a method 100 for monitoring the environment of a vehicle.

In context of the present disclosure, the vehicle can be any ground-based vehicle (e.g., car, truck, motorcycle, etc.), watercraft, aircraft, and the like. In practice, the vehicle may be an autonomously or semi-autonomously driving vehicle equipped with one or more sensors.

As can be seen from the flow chart, method 100 comprises obtaining 110, using at least one sensor of the vehicle and a monitoring criterion, object-specific information on an object related to a third party. Further, method 100 comprises providing 120 the object-specific information to the third party.

The sensor can be any means to obtain information on the environment (surrounding) of the vehicle. In practice, the sensor, e.g., comprises or corresponds to an imaging sensor, a distance sensor, and/or any measurement system for sensing the environment. Examples of such sensors, e.g., comprise LIDAR sensors, RADAR sensors, (RGB) cameras, infrared sensors, and the like. The skilled person will appreciate that the information on the environment can be also received from other vehicles. So, the sensor may additionally or alternatively comprise any interface for communication of information on the environment, e.g., with other vehicles and/or (communicative) infrastructure objects. For example, the sensor may comprise any wireless communication means such as an antenna and/or a signal processing circuit. Accordingly, the object-specific information may be indicative of sensor data of the at least one (on-board) sensor of the vehicle and/or information communicated with other vehicles or infrastructure objects (e.g., sensor data from one or more sensors of a vehicle and/or an infrastructure object).

The use of the monitoring criterion, may ensure that privacy protection is provided, as laid out in more detail below. As the skilled person having benefit from the present disclosure will appreciate, the monitoring criterion can be any criterion that is suitable to determine whether information on the environment relates to an object related to the third party, e.g., if information relates to an object which the third party is authorized to monitor. In this way, only (privacy-preserving) object-specific information, e.g., information specifically dedicated to the object or exclusively including information on the object, is obtained which the third party is allowed or authorized to receive and/or use. The monitoring criterion, hence, may be also understood as a privacy criterion. Method 100 provides a privacy preserving approach that allows to share information collected by vehicles for external/non-vehicle-related purposes, in particular, for the use of maintenance and/or surveillance purposes by third parties.

The skilled person having benefit from the present disclosure will appreciate that the proposed concept may be applied for any object. In automotive applications, method 100, e.g., can be applied for any object "visible" for vehicles. So, examples of the object comprise an infrastructure object, a building, a streetlight, a traffic light, a (bicycle) parking lot, another vehicle, and the like. In particular, the proposed concept may be applied by or for infrastructure providers that may need to monitor infrastructure objects/buildings, e.g., for maintenance purposes.

For obtaining 110 the object-specific information, the vehicle may monitor the environment for obtaining sensor data of the environment using the sensor. Then, the object-specific information may be obtained from the sensor data of the environment based on the monitoring criterion. In doing so, e.g., an object-specific portion corresponding to the object-specific information is extracted from the sensor data of the environment is extracted. The monitoring criterion, e.g., provides that (only) the object-specific information is extracted from (continuously recorded) sensor data. In particular, the object-specific information may be extracted from sensor data for vehicle-related purposes, e.g., for autonomously driving, semi-autonomously driving, or other driver assistance functions.

Alternatively or additionally, the monitoring criterion may provide that the sensor only records information on the object. For this, the monitoring criterion, e.g., is adapted such that the sensor is only activated when the sensor is able to record the object. The monitoring criterion, e.g., is configured such that the imaging sensor is only activated when the vehicle is appropriately positioned that the imaging sensor records the object. As a result, the sensor data may only comprise object-specific sensor data which may serve as the object-specific information.

Accordingly, the object-specific information may include sensor data as output by the sensor. In embodiments, the object-specific information, e.g., includes image data, LIDAR data, RADAR data.

Alternatively or additionally, the object-specific information may be indicative of an (high-level) interpretation or evaluation of the sensor data. In examples, the object-specific information, e.g., comprises meta information on the object from the sensor data. The meta information, e.g., can be understood as abstract or high-level information on the object. In practice, the meta information, e.g., comprises information on properties of the object. In applications for maintenance purposes, the meta information, e.g., (only) indicates whether and/or which measures are necessary to repair or maintain the object. For obtaining the object-specific information comprises obtaining the meta information from the sensor data using an aggregator. The aggregator, in practice, may be configured to interpret or evaluate the sensor data in order to extract the meta information.

In order that the meta information indicates the desired kind of information or properties of the object, the aggregator may be tailored to a desired use of the meta information. As mentioned above, the aggregator, e.g., is configured to extract meta information indicating whether the object needs maintenance or repair measures. For this, the aggregator may be configured by the third party or an external software engineering company entrusted with the configuration of the aggregator. In this case, method 100 may provide for measures to ensure that the aggregator works properly, i.e., such that the privacy of others is protected. So, for this design regulations and Code/Model review measures may be taken. For example, method 100 may optionally provide for the use of a privacy evaluator program for checking the aggregator. In doing so, the privacy evaluator may compare the aggregator to at least one reference software architecture. The reference software architecture, e.g., is one of a (limited) set of acceptable software architectures which comply with predefined security and privacy protection requirements or regulations. By comparing the reference software architecture with the aggregator, it may be determined whether a software architecture of the aggregator or certain (critical) parts thereof match with or correspond to acceptable software architectures to check whether the aggregator works properly and/or complies with the predefined security and privacy protection requirements or regulations. The skilled person having benefit from the present disclosure will appreciate that the reference software architecture may be adapted to various security and/or privacy protection requirements or regulations, e.g., in order to consider different privacy protection regulations of different countries.

In some applications, the aggregator may be trained using machine learning. The skilled person will understand that, in this case, it may depend particularly on the training data for training the aggregator whether it works properly. So, alternatively or additionally, the privacy evaluator may be configured to check whether the aggregator works properly based on training data used for training the aggregator. For this, the privacy evaluator may be fed with the training data to check whether the training data is actually related to and/or reasonable in view of the object to be monitored and/or the purpose of the object-specific information. In embodiments, method 100 is applied for monitoring purposes and the object, e.g., is a streetlight. In this case, the training data may comprise images and the privacy evaluator, e.g., may check using image recognition whether at least a certain portion of the training data is indicative of streetlights. The skilled person will appreciate that this may be analogously applied to any kind of training data, object, and/or purpose of the object-specific information.

As the skilled person having benefit from the present disclosure will appreciate that, for privacy preservation, information on the environment, e.g., may be restricted to a specific area or space which the third party is authorized to monitor. For this, the monitoring criterion may be indicative of a predefined location where the object is located. Accordingly, obtaining 110 the object-specific information, in some embodiments, comprises determining whether the object-specific information is representative of the predefined location and obtaining the object-specific information if the object-specific information is representative of the predefined location.

In this way, other locations may be excluded from the object-specific information to not violate the privacy of others. For this, e.g., geofencing is applied such that only information of the location of the object is recorded and/or included in the object-specific information. To this end, the information on the location may indicate a certain area of a street where the vehicle is able to record the object and only sensor data which have been recorded when the vehicle was in this area is included or represented in the object-specific information. For this, e.g., GPS (global positioning system) data or other information on a position of the vehicle may be used. In geofencing, e.g., so-called "geo fences" may be specified that include (only) the location of the object and provide that the vehicle only records sensor data when it is inside the geo fences and/or only includes sensor data or information relating to the location enclosed by the geo fences.

In other embodiments, the sensor data may comprise image data and image recognition may be used to determine information included in the object-specific information.

In exemplary use cases, e.g., method 100 is applied for monitoring (specific) bicycle parking lots for maintenance and/or surveillance and the information on the location is (only) indicative of locations of the bicycle parking lots such that other locations outside the bicycle parking lots (e.g., buildings surrounding the bicycle parking lots) are excluded from the object-specific information.

The skilled person having benefit from the present disclosure will appreciate that the aforementioned aspects and features may be analogously applied and/or adapted to other use cases or objects.

In some use cases scenario-based monitoring may be preferred, e.g., in order to avoid unnecessary communication. Such scenario-based monitoring aims that the third party only receives object-specific information in case of a certain scenario, e.g., only when the bicycle parking lot needs repair or maintenance measures.

To this end, the monitoring criterion may be indicative of one or more predefined scenarios for the environment. The monitoring criterion, e.g., specifies that the object-specific information is only obtained when/if the one or more scenarios are present in the environment. Exemplary scenarios, e.g., are scenarios where the bicycle parking lot is broken or dirty such that it needs repair and cleaning, respectively.

Accordingly, obtaining the object-specific information may comprise determining whether at least one of the predefined scenarios is present in the environment and obtaining the object-specific information if at least one of the predefined scenarios is present. In practice, e.g., (only) object-specific information indicative of at least one of the predefine scenarios is extracted from the sensor data and/or the sensor data of the object is (only) recorded if at least one of the predefined scenarios is present.

The skilled person having profit of the present disclosure will appreciate that there may be different ways to determine whether one or more of the scenarios are present. In some use cases, e.g., it is determined whether one or more of the scenarios are present based on a message received from a person or user. Such a message, e.g., is received from a user of the bicycle parking lot and may indicate that the bicycle parking lot is damaged or dirty.

Additionally or alternatively, the object-specific information may be used to determine whether at least one of the scenarios is present. In embodiments, e.g., determining whether at least one of the predefined scenarios is present comprises determining whether the object-specific information is indicative of at least one of the predefined scenarios. In practice, the object-specific information, e.g., is indicative of or comprises image data of the object and image recognition may be used to determine from the image data whether at least one of the scenarios is present. In embodiments, e.g., it is determined from image data whether the bicycle parking lot is damaged or dirty through image recognition.

Then, the object-specific information may be (only) obtained if the object-specific information is indicative of at least one of the predefined scenarios. In practice, e.g., (only) a portion indicative of at least one of the scenarios is extracted from the sensor data in order to forward it to the third party. For example, (only) a portion indicating that and/or how the bicycle parking lot is damaged may be obtained and provided to the third party.

The skilled person will appreciate that, in practice, various routines or programs may be used to determine whether the object-specific information is indicative of one or more of the predefined scenarios. In some embodiments, it may be preferred to use a machine-learning-based program trained to detect the one or more predefined scenarios in the object-specific information for this. In order that the machine-learning-based program is able to detect the scenario/s from the object-specific information, it may be trained based on training data (pairs) indicative of one or more of the predefined scenarios. In practice, e.g., the machine-learning-based program is an image recognition program and the training data may comprise image data of damaged or dirty bicycle parking lots in order to detect such scenarios.

In some use cases, the program used to determine whether the object-specific information is indicative of at least one of the scenarios may be manipulated and/or may not work properly. In some cases, the program, e.g., erroneously detects that the object-specific information is indicative of at least one of the scenarios and/or (other) false positive detections may occur. In order to detect such malfunctions, the method may further comprise determining information on false positive detections and/or a frequency of detections of at least one of the scenarios from the object-specific information and determining a malfunction based on the information on false positive detections and/or a frequency of detections of at least one of the scenarios.

In practice, e.g., false positive detections of wrong/false objects (other than the above-mentioned object) and/or too many erroneous detections of one of the scenarios occur. In such cases, the program, e.g., detects more often than expected that the bicycle parking lot is damaged. One idea of the present disclosure, therefore, is to determine a malfunction based on the frequency of detections. To this end, the frequency of detections, e.g., is compared with a maximum expected frequency of detections of one of the predefined scenarios. Then, a malfunction may be assumed/determined if the frequency of detections exceeds the maximum expected frequency.

Alternatively or additionally, false detections may be determined. For this, the object-specific information may be reviewed manually and/or automatically by another appropriately designed software and/or by an independent entity. In practice, the object-specific information, e.g., relates to a wrong object. The object to be monitored, e.g., comprises a building and the object-specific information may erroneously relate to a person. In this case, an automatic and/or manual review may show that the wrong object is monitored and the information on false detections, accordingly, may indicate that the object-specific information relates to the wrong object. Accordingly, a malfunction may be assumed in this case. Additionally, such information may be excluded from the object-specific information. The review of positive detections may ensure that the information included in the object-specific information is in fact reasonable for the described purpose and prevent that the object-specific information relates to something else. The review may be based on a random choice among all positive detections, i.e., on a random choice of the information included in the object-specific information.

In some applications of the proposed concept, it may be desired to monitor one or more very specific objects. Accordingly, the monitoring criterion may be indicative of at least one predefined infrastructure object. In this case, obtaining the object-specific information may comprise determining if the object-specific information is representative of the at least one predefined infrastructure object and obtaining the object-specific information if the object-specific information is representative of the at least one predefined infrastructure object.

The monitoring criterion, e.g., specifies that (only) object-specific information of one or more (very) specific objects or infrastructure objects is to be obtained for providing it to the third party. In embodiments, the monitoring criterion, e.g., specifies that (only) information on a few specific bicycle parking lots is obtained for providing it to the third party. In practice, e.g., they are owned and/or maintained by the same company or person. Accordingly, (only) object-specific information of those bicycle parking lots may be obtained and provided to the company or person. So, the monitoring criterion being indicative of at least one predefined infrastructure object may provide that very specific objects can be monitored by the third party.

In some embodiments, an appropriately trained machine-learning-based program is used for determining whether the object-specific information is indicative of the at least one predefined infrastructure object. In some use cases, the object-specific information, e.g., comprises image data and the machine-learning-based program is trained to detect the infrastructure object in the image data through image recognition. As the skilled person will understand, for this, training data including images of the infrastructure object may be used to train the machine-learning-based program.

In some cases, the obtained object-specific information may include sensitive information. In practice, the object-specific information may include image data of number plates or a face of a person (close to or in front of the monitored object). For this, the monitoring criterion may specify that such information is obliterated and obtaining the object-specific information may, accordingly, comprise obliterating a portion of the object-specific information based on the at least one monitoring criterion. In embodiments, the monitoring criterion specifies that image data of number plates or faces is obliterated. Accordingly, such information in the object-specific information may be obliterated. Obliterating such information may include any measure that is suitable to remove the sensitive information from the object-specific information or make it unrecognizable. For this, e.g., image data of number plates or faces is removed or blurred. In order to do so, such sensitive information may be detected using image recognition and, then, automatically obliterated.

In some embodiments, the at least one monitoring criterion specifies at least one object type to be obliterated for privacy protection. Examples of such object types, e.g., comprise sensitive objects such as number plates, faces, person, vehicles, or the like. Obliterating the portion of the object-specific information may accordingly comprise determining, from the object-specific information, an information part which is indicative of the at least one object type specified by the at least one monitoring criterion and obliterating the determined information part. In this way, information on sensitive objects may be excluded from the object-specific information. In embodiments, e.g., the object-specific information comprises image data and information on such object types in the image data is detected through image recognition and, then, blurred or removed. As the skilled person will understand, for this, an appropriately trained machine-learning-based program may be used.

In applications, method 100 may be executed by the vehicle and/or an external server separate from the vehicle.

The external server, e.g., includes or corresponds to an OEM backend of a manufacturer of the vehicle and may be configured to communicate with the vehicle and the third party. In this case, the OEM backend may execute method 100 to obtain the object-specific information and provide it to the third party. This, e.g., allows to apply method 100 to vehicles that are not specifically adapted to the proposed concept, e.g., adapted to obtain the object-specific information at the vehicle. As well, this allows execute method 100 centrally for a plurality, e.g., a fleet of vehicles configure to communicate with the external server. Also, this may save additional computing resources at the vehicle.

As well, method 100 may be executed by the vehicle, e.g., in order to dispense with such a separate external server. For this, the vehicle may be appropriately configured to execute method 100 and to communicate with the third party.

The skilled person having benefit from the present disclosure will appreciate that programs and/or routines for executing the proposed method 100 may be protected from attacks to improve the security of sensitive data stored and/or processed during method 100. In particular, so-called "sandboxing" may be applied to this end, thereby detaching software for the proposed concept from other code running in the vehicle to prevent mutual interference. Alternatively or additionally, also other measures for data protection may be taken and implemented.

In some applications, method 100 may be also executed by an external server and a vehicle in a cooperative manner., e.g., such that the vehicle obtains the object-specific information and the external server provides the object-specific information to the third party, as laid out in more detail below.

Some aspects and features of embodiments of the present disclosure are described in more detail below with reference to Fig. 2.

Fig. 2 schematically illustrates a use case of the proposed concept. In the shown use case, e.g., an infrastructure provider 230 may want to monitor an infrastructure object 220 such as a bicycle parking lot. In the present example, the infrastructure provider 230 may own the infrastructure object 220 or bicycle parking lot or may be otherwise authorized to monitor it. However, monitoring the infrastructure may require separate cameras and/or human resources.

The parking lot, e.g., is next to a street such that it is visible for a vehicle 210 passing by. According to a basic idea of the present disclosure, it is therefore proposed to monitor the infrastructure object using vehicle 210 that randomly or purposefully passes the infrastructure object. Vehicle 210 may be equipped with one or more sensors for monitoring its environment. In practice, vehicle 210, e.g., is a (semi-) autonomously driving vehicle and the sensors may include one or more sensors of an autonomous driving system or a driver assistance system. When passing by, vehicle 210 may record the infrastructure object 220, thereby generating sensor data of the infrastructure object 220. In doing so, vehicle 210 applies a monitoring criterion in order to obtain object-specific information from the sensor data such that the obtained object-specific information can be shared with the infrastructure provider while preserving the privacy of others.

The monitoring criterion, e.g., provides that the sensors are only activated when it passes the infrastructure object 220 and, thus, specifically object-specific sensor data of the infrastructure object is recorded and included in the object-specific information. Optionally, the sensor data may be processed to obtain the object-specific information. In examples, the sensor data may be evaluated to obtain meta information on the infrastructure object 220, as explained above. The meta information, e.g., indicate whether the infrastructure needs repair, maintenance, and/or cleaning, e.g., whether the infrastructure object 220 is damaged or dirty.

Optionally, the sensors of vehicle 210 are permanently active, e.g., in order to continuously sense the environment for the autonomous driving system or driver assistance system. In this case, the monitoring criterion may be applied to extract the object-specific information from the sensor data such that (only) sensor data specifically representing the infrastructure object 220 is included in the object-specific information and other (sensitive) sensor data is not included/excluded from the object-specific information.

In a next step, the (privacy preserving) object-specific information is transmitted to an external server 240, e.g., a backend of vehicle 210 (schematically indicated by the dashed arrow numbered 212). The external server 240, then, provides the object-specific information to the infrastructure provider 230 (as indicated by the dashed arrow numbered 242).

In some other embodiments, vehicle 210 may provide the sensor data to the external server 240 and the external server 240 obtains the object-specific information from the sensor data. For this, the infrastructure provider 220 may submit an appropriate request to the external server 240 for the object-specific information.

As the skilled person having benefit from the present disclosure will appreciate that the use case illustrated in Fig. 2 may be also combined with other aspects and features described proposed herein. As well, the skilled person will appreciate that the illustrated use case may be also applied to other applications, vehicles, and/or objects.

In particular, the skilled person will understand that the proposed concept may be applied for use cases with multiple third parties and/or may be specifically tailored to a purpose of the application. In practice, e.g., different infrastructure providers may have different specifically designed machine-learning programs in order to obtain object-specific information (see above) specifically customized to the purpose for which the object-specific information is used. To this end, individual machine-learning-based programs may be deployed.

Further aspects and features regarding the deployment of such a machine-learning-based program for obtaining the object-specific information are described below in more detail with reference to Fig. 3.

Fig. 3 shows a flow chart schematically illustrating how a machine-learning-based program for the proposed concept is generated and deployed.

In particular, Fig. 3 may relate to an application where a vehicle fleet backend manager 330 (typically an OEM) offers a service to identify issues that are visible from the street and this service is requested by some independent infrastructure provider 310.

As indicated by the flow chart, a (independent) infrastructure provider 310 may order a (individual) machine-learning-based program for obtaining sensor data and/or meta information for the object-specific information, e.g., in the object-type-based, scenario-based, and/or location-based manner described above, from a machine learning engineering office 320. In particular, the machine-learning-based program may be configured for infrastructure state recognition which is why the machine-learning (ML)-based program may be also referred to as "ML recognition module". The machine learning engineering office 320 may customize the ML recognition module under consideration of a purpose of the object-specific information or the ML recognition module, of a predefined and/or chosen reference software or ML architecture, of predefined and/or chosen training data, and/or desired geo fences (see above).

The machine learning engineering office, then, provides the ML recognition module to a backend of the vehicle, e.g., a so-called "vehicle fleet connected drive software manager". The backend, then, deploys the ML recognition module. For this, the backend, e.g., installs the program at the vehicle and/or the backend.

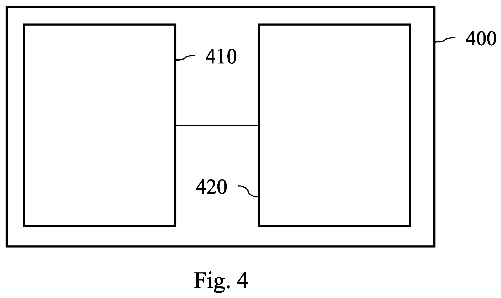

The proposed concept may be also implemented in an apparatus, as described in more detail below with reference to Fig. 4.

Fig. 4 shows a block diagram schematically illustrating an embodiment of an apparatus 400 implementing the proposed concept.

As can be seen from Fig. 4, apparatus 400 comprises one or more interfaces 410 for communication and a data processing circuit 420 configured to control the one or more interfaces 410. The data processing circuit 420 is further configured to control the one or more interfaces and execute, using the one or more interfaces, one of the proposed methods. That is, the apparatus 400 may be configured to execute method 100. Accordingly, the apparatus 400 may be implemented in an external server for a vehicle and/or in a vehicle.

In embodiments the one or more interfaces 410 may comprise means for communication with vehicles or another server. For this, the one or more interfaces 410 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 410 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 410 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 4, the one or more interfaces 410 are coupled to the data processing circuit 420. In embodiments the data processing circuit 420 may comprise any means for processing information according to one of the proposed methods. The data processing circuit 420 may be implemented using one or more processing units, one or more processing devices, any means for processing, such as a processor, a computer or a programmable hardware component being operable with accordingly adapted software. In other words, the described functions of the data processing circuit 420 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

### References

- 100: method
- 110: obtaining object-specific information
- 120: providing the object-specific information to the third party
- 210: vehicle
- 212: dashed arrow
- 220: object
- 230: third party/infrastructure provider
- 240: external server/backend
- 242: dashed arrow
- 310: infrastructure provider
- 320: machine learning engineering office
- 330: vehicle fleet connected drive software manager/backend
- 400: apparatus
- 410: one or more interfaces
- 420: data processing circuit

## Claims

1. A method (100) for monitoring the environment of a vehicle (210), the method (100) comprising:
obtaining (110), using at least one sensor of the vehicle (210) and a monitoring criterion, object-specific information on an object (220) related to a third party (230);
providing (120) the object-specific information to the third party (230).

2. The method (100) of claim 1, wherein obtaining (110) the object-specific information comprises:
monitoring the environment of the vehicle (210) for obtaining sensor data of the environment; and
obtaining, based on the monitoring criterion, the object-specific information from the sensor data of the environment.

3. The method (100) of claim 2, wherein the obtained object-specific information comprises an object-specific portion of the sensor data of the environment.

4. The method (100) of claim 2 or 3, wherein the object-specific information comprises meta information on the object (220) from the sensor data.

5. The method (100) of claim 4, wherein obtaining (110) the object-specific information comprises obtaining the meta information from the sensor data using an aggregator and a privacy evaluator program for checking the aggregator by comparing the aggregator to at least one reference software architecture and/or based on training data used for training the aggregator.

6. The method (100) of any one of the preceding claims, wherein the monitoring criterion is indicative of a predefined location where the object (220) is located, and wherein obtaining (110) the object-specific information comprises:
determining whether the object-specific information is representative of the predefined location; and
obtaining the object-specific information if the object-specific information is representative of the predefined location.

7. The method (100) of any one of the preceding claims, wherein the monitoring criterion is indicative of one or more predefined scenarios for the environment, and wherein obtaining (110) the object-specific information comprises:
determining whether at least one of the predefined scenarios is present in the environment; and
obtaining the object-specific information if at least one of the predefined scenarios is present.

8. The method (100) of claim 7, wherein determining whether at least one of the predefined scenarios is present comprises determining whether the object-specific information is indicative of at least one of the predefined scenarios, and wherein obtaining (110) the object-specific information based on the monitoring criterion comprises obtaining the object-specific information if the object-specific information is indicative of at least one of the predefined scenarios.

9. The method (100) of claim 7 or 8, wherein the method (100) further comprises:
determining information on false positive detections and/or a frequency of detections of at least one of the scenarios from the object-specific information; and
determining a malfunction based on the information on false positive detections and/or a frequency of detections of at least one of the scenarios.

10. The method (100) of any one of the preceding claims, wherein the environment comprises at least one infrastructure object (220), and wherein the object-specific information is indicative of the at least one infrastructure object (220).

11. The method (100) of claim 10, wherein the monitoring criterion is indicative of at least one predefined infrastructure object (220), and wherein obtaining (110) the object-specific information comprises:
determining if the object-specific information is representative of the at least one predefined infrastructure object (220); and
obtaining the object-specific information if the object-specific information is representative of the at least one predefined infrastructure object (220).

12. The method (100) of any one of the preceding claims, wherein obtaining (110) the object-specific information comprises obliterating a portion of the object-specific information based on the at least one monitoring criterion.

13. A computer program having a program code for performing at least one of the methods (100) of the preceding claims, when the computer program is executed on a computer, a processor, or a programmable hardware component.

14. An apparatus (400) comprising:
one or more interfaces (410) for communication; and
a data processing circuit (420) configured to:
control the one or more interfaces (410); and
execute, using the one or more interfaces (410), one of the methods (100) of the claims 1 to 12.

15. A vehicle (210) comprising the apparatus of claim 14.
